(19) **Europäisches Patentamt**

**European Patent Office**

**Office européen des brevets**

(11) **EP 1 074 569 A1**

(12) **EUROPÄISCHE PATENTANMELDUNG**

(43) Veröffentlichungstag:
07.02.2001 Patentblatt 2001/06

(51) Int. Cl.⁷: **C08G 18/42**, C08G 18/48,
C08G 18/62

(21) Anmeldenummer: **00115069.7**

(22) Anmeldetag: **27.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.07.1999 DE 19935487**

(71) Anmelder:
**BASF AKTIENGESELLSCHAFT
67056 Ludwigshafen (DE)**

(72) Erfinder:
• **Bauer, Stephan, Dr.**
**49179 Ostercappeln (DE)**
• **Chakrabarti, Sarbananda**
**68169 Mannheim (DE)**
• **Wagner, Klaus**
**49419 Wagenfeld (DE)**
• **Wetterling, Monika**
**01968 Senftenberg (DE)**
• **Winkler, Jürgen**
**01987 Schwarzheide (DE)**
• **Tischer, Gerlinde**
**01945 Ruhland (DE)**
• **Harre, Kathrin, Dr.**
**01109 Dresden (DE)**
• **Böhme, Peter, Dr.**
**01561 Böhla (DE)**

(74) Vertreter:
**Isenbruck, Günter, Dr. et al
Patent- und Rechtsanwälte,
Bardehle-Pagenberg-Dost-Altenburg-Geissler-Isenbruck
Theodor-Heuss-Anlage 12
68165 Mannheim (DE)**

(54) **Polyolgemische für Polyurethane und Gebilde mit verbesserter Hydrolysestabilität**

(57) Die Erfindung betrifft ein Polyolgemisch bestehend aus

0,1 bis 100 Gew.-% eines Polyesterols (i) oder eines Polyetherols (ii) oder mindestens zwei davon, wobei

(i) das Polyesterol (i) erhältlich ist aus

    a) einem Copolymer I, erhältlich aus einem Olefin IV und einer $\alpha,\beta$-ungesättigten Carbonsäure V, und einem Monoalkohol VI oder einer $C_2$- bis $C_9$-Polyhydroxyverbindung VII oder einem Diol II, das 10 oder mehr Kohlenstoffatome aufweist, oder einem Gemisch aus zwei oder mehr davon;
oder
    b) dem Diol II, das 10 oder mehr Kohlenstoffatome aufweist, und einer $C_2$- bis $C_9$-Polyhydroxyverbindung VII oder einer Carbonsäure VIII mit mindestens zwei Carboxylgruppen oder einem Gemisch aus zwei oder mehr davon;

ii) das Polyetherol (ii) erhältlich ist aus

    c) dem Diol II, das 10 oder mehr Kohlenstoffatome aufweist, und einem Alkylenoxid IX;
oder

    d) einem Alkylamin III und dem Alkylenoxid IX;

wobei das Polyesterol (i) und das Polyetherol (ii) 10 bis 10000 Kohlenstoffatome besitzen und nicht aus Rizinusöl oder einer dimeren Fettsäure erhältlich sind,

0 bis 99,9 Gew.-% mindestens eines weiteren Polyesterols oder mindestens eines weiteren Polyetherols; sowie

0 bis 10 Gew.-% Zusatzstoffen.

EP 1 074 569 A1

**Beschreibung**

Die Erfindung betrifft Polyole, ein Verfahren zur Herstellung eines Polyurethans mit diesen Polyolen, dieses Polyurethan sowie ein Verfahren zur Einstellung von Eigenschaften in diesem Polyurethan und verschiedene Verwendungen dieses Polyurethans bzw. dieses Polyols ferner dieses Polyol bzw. dieses Polyurethan beinhaltende Gebilde.

Polyurethane, insbesondere Polyurethanschäume, die Polyetherole oder Polyesterole oder beide als Polyole enthalten, unterliegen über längere Zeiträume durch äußere Einflüsse wie Feuchtigkeit bzw. höhere Temperaturen Alterungserscheinungen, insbesondere in Form einer partiellen Hydrolyse. Diese Alterungserscheinungen können die Gebrauchseigenschaften, insbesondere die mechanischen Eigenschaften, beispielsweise die mechanische Festigkeit, oder auch die Lebensdauer entsprechender Polyurethane beeinträchtigen.

In der US 42 64 743 wird vorgeschlagen, zur Herstellung von Weichschäumen Polyole zu verwenden, die auf Basis von dimeren Fettsäuren oder Ricinusöl hergestellt werden. Die Verwendung von dimeren Fettsäuren und insbesondere die Verwendung von Ricinusöl in Polyurethanschäumen bringt jedoch den Nachteil einer nicht unerheblichen Geruchsbelastung mit sich. Eine derartige Geruchsbelastung ist insbesondere beim Einsatz der so hergestellten Polyurethanschäume im Automobilbau und dort vorzugsweise im Innenraum der Automobile nachteilhaft. Weiterhin wirken sich die mit dem Naturprodukt Ricinusöl verbundenen Chargenqualitätsschwankungen nachteilhaft auf die Kontinuität der Materialeigenschaften der daraus hergestellten Polyurethanedukte und Polyurethane aus.

Demgemäß liegt eine Aufgabe der vorliegenden Erfindung darin, ein Polyol bzw. ein auf diesem Polyol basierendes Polyurethan zur Verfügung zu stellen, das bei möglichst geringen Alterungserscheinungen, insbesondere bei Hydrolyse, eine niedrige Geruchsbelastung und gleichbleibende Materialeigenschaften aufweist.

Diese Aufgabe wird durch ein Polyolgemisch gelöst, bestehend aus

0,1 bis 100, bevorzugt 0,5 bis 50 Gew.-% eines Polyesterols (i) oder eines Polyetherols (ii) oder einem Gemisch aus zwei oder mehr davon, wobei

(i) das Polyesterol (i) erhältlich ist aus

a) einem Copolymer I, erhältlich aus einem Olefin IV und einer $\alpha,\beta$-ungesättigten Carbonsäure V, und einem Monoalkohol VI oder einer $C_2$- bis $C_9$-Polyhydroxyverbindung VII oder einem Diol II, das 10 oder mehr Kohlenstoffatome aufweist, oder einem Gemisch aus zwei oder mehr davon; oder
b) dem Diol II, das 10 oder mehr Kohlenstoffatome aufweist, und einer $C_2$- bis $C_9$-Polyhydroxyverbindung VII oder einer Carbonsäure VIII mit mindestens zwei Carboxylgruppen oder einem Gemisch aus zwei oder mehr davon;

ii) das Polyetherol (ii) erhältlich ist aus

c) dem Diol II, das 10 oder mehr Kohlenstoffatome aufweist, und einem Alkylenoxid IX; oder

d) einem Alkylamin III und dem Alkylenoxid IX;

wobei das Polyesterol (i) und das Polyetherol (ii) 10 bis 10000 Kohlenstoffatome besitzen und nicht aus Ricinusöl oder einer dimeren Fettsäure erhältlich sind,

0 bis 99,9, bevorzugt 50 bis 99,5 Gew.-% mindestens eines weiteren Polyesterols oder mindestens eines weiteren Polyetherols; sowie
0 bis 10 Gew.-% Zusatzstoffen.

In einer erfindungsgemäßen bevorzugten Ausführungsform des Polyolgemisches besteht dieses aus 5 bis 40 und bevorzugt 10 bis 30 Gew.-% eines Polyesterols (i) oder eines Polyetherols (ii) oder einem Gemisch aus zwei oder mehr davon und 95 bis 60, bevorzugt 90 bis 70 Gew.-% mindestens eines weiteren Polyesterols oder mindestens eines weiteren Polyetherols sowie 0 bis 5 und bevorzugt 0 bis 3 Gew.-% Zusatzstoffe.

Für den Fall, daß neben mindestens einem Polyesterol (i) mindestens ein Polyetherol (ii) vorliegt, ist es bevorzugt, daß von dem mindestens einen Polyesterol (i) und dem mindestens einem Polyetherol (ii) jeweils mindestens 5 Gew.-%, bezogen auf das Polyesterol (i) und das Polyetherol (ii), vorliegen.

Bei der Herstellung des Copolymer I wird im Bereich von 1 bis 99, bevorzugt von 50 bis 99 und besonders bevorzugt von 75 bis 99 Gew.-% Olefin IV und im Bereich von 1 bis 99, bevorzugt 1 bis 50 und besonders bevorzugt 1 bis 25 Gew.-% einer $\alpha$-, $\beta$-ungesättigten Carbonsäure V, jeweils bezogen auf das Copolymer I, eingesetzt.

In einer anderen Ausführungsform des Polyolgemisches enthält dieses nur das Polyesterol (i) oder nur das Polyetherol (ii), vorzugsweise in den vorstehend angegebenen Gew.-%-Bereichen.

Weiterhin liegt eine bevorzugte Ausführungsform vor, wenn in dem Polyolgemisch nur die Varianten a) oder b) des Polyesterols (i) oder die Varianten c) oder d) des Polyetherols (ii) - bevorzugt in den vorstehend angegebenen Gew.-%-Bereichen - vorliegen.

Die im folgenden beschriebenen erfindungsgemäßen Polyoletherole (ii) und Polyesterole (i) sind bei Raumtemperatur vorzugsweise flüssig. Weiterhin ist es bevorzugt, daß das Polyol eine ausreichende Pumpfähigkeit aufweist. Beim Polyesterol (i) liegt die Viskosität für ausreichende Pumpfähigkeit im Bereich von 100 bis 10.000, bevorzugt von 100 bis 5000 und besonders bevorzugt von 150 bis 2000 mPa*s bei 75°C. Diese ist beim Polyetherol (ii) gegeben, wenn die Viskosität bei 25 °C in einem Bereich von 100 bis 50.000, bevorzugt 150 bis 20.000 und besonders bevorzugt 200 bis 10.000 mPa*s liegt.

Bevorzugt ist ein Polyolgemisch, wobei das Polyesterol (i) oder Polyetherol (ii) oder mindestens zwei davon mindestens einen der folgenden Eigenschaften zeigen:

- eine Hydroxylzahl im Bereich von 10 bis 600, bevorzugt für Polyurethanweichschäume von 20 bis 100 und besonders bevorzugt von 30 bis 70 mgKOH/g,

- eine Säurezahl im Bereich von 0 bis 5, bevorzugt von 0 bis 2 und besonders bevorzugt von 0 bis 1 mgKOH/g,

- einen Wassergehalt im Bereich von 1 bis 200, bevorzugt von 1 bis 150 und besonders bevorzugt von 1 bis 50 ppm.

Besonders bevorzugt ist ein Polyolgemisch, das alle der vorstehenden Eigenschaften zeigt.

Die 10 bis 10000 Kohlenstoffatome des Polyesterols (i) bzw. des Polyetherols (ii) stellen vorzugsweise einen zusammenhängenden Kohlenwasserstoff dar, dieser weist vorzugsweise Aryl-, Alkyl- oder Cycloalkylelemente oder mindestens zwei davon auf. Bevorzugt besteht der zusammenhängende Kohlenwasserstoff aus verzweigten oder unverzweigten, vorzugsweise unverzweigten Kohlenwasserstoffketten. Der zusammenhängende Kohlenwasserstoff besteht vorzugsweise aus 10 bis 10.000, bevorzugt 10 bis 5.000 und besonders bevorzugt 15 bis 1.500 Kohlenstoffatomen.

Die erfindungsgemäßen bevorzugten Olefine IV bestehen aus 2 bis 40, bevorzugt 2 bis 30 und besonders bevorzugt 2 bis 18 Kohlenstoffatomen. Die vorgenannten Olefine können α-, β-, γ-, δ-Olefine, vorzugsweise jedoch α- oder β-Olefine und besonders bevorzugt α-Olefine sein. Für das Copolymer (a) sind α-Olefine mit 12 bis 24 Kohlenstoffatomen besonders bevorzugt. Bei dem Copolymer (a) ist es darüber hinaus bevorzugt, daß dieses ein nicht verzweigtes Alkylen ist. Als Olefine bzw. Alkene sind Ethen, Propen, 1-Buten, 2-Buten, 1-Penten, 2-Penten, 1-Hexen, 2-Hexen, 3-Hexen, 1-Hepten, 2-Hepten, 3-Hepten, 1-Octen, 2-Octen, 3-Octen, 4-Octen, 1-Nonen, 2-Nonen, 3-Nonen, 4-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Eicosen, 1-Heneicosen, 1-Docosen, 1-Tricosen, 1-Tetracosen, 1-Pentacosen, 1-Hexacosen, 1-Octacosen, 1-Triaconten, 3-Methyl-propen, 3-Methyl-1-buten, 3,3-Dimethyl-1-buten, 2,3-Dimethyl-1-buten, 2,3,3-Trimethyl-1-buten, 2-Ethyl-1-buten, 2-Methyl-2-buten, 2,3-Dimethyl-2-buten, 3-Methyl-1-penten, 4-Methyl-1-penten, 2,4,4-Trimethyl-1-penten, 2-Methyl-1-penten, 2-Methyl-2-penten, 2,4,4-Trimethyl-2-penten, 2,3,4-Trimethyl-2-penten, 2-Methyl-1-hepten, 2-Methyl-2-hepten, 2-Methyl-1-undecen, 1,3-Butadien, Isopren, 2,3-Dimethyl-1,3-Butadien, Piperylene, 3-Methyl-1,3-pentadien, 2,4-Dimethyl-1,3-pentadien, 1,3-Hexadien, Vinylcyclopetan, Vinylcyclohexan, Allylcyclopentan, Norbornylen, Terpene, wie Limonen, Caren, α-Pinen, Styrol, 3-Methylstyrol, 4-Methylstyrol, 4-t-Butylstyrol, 2,4-Dimethylstyrol, 2,5-Dimethylstyrol, 2,4,6-Dimethylstyrol und Stuben bevorzugt.

Erfindungsgemäß eingesetzte α,β—ungesättigte Carbonsäuren V sind insbesondere Acrylsäurederivate, bestehend aus 3 bis 20, bevorzugt 3 bis 15 und besonders bevorzugt 3 bis 10 Kohlenstoffatomen. Als Acrylsäurederivate sind beispielhaft zu nennen Acrylsäure, Methacrylsäure, Acrylsäurechlorid, Methacrylsäurechlorid, Acrylsäuremethylester, Methacrylsäuremethylester, Acrylsäureethylester, Methacrylsäureethylester, Acrylsäurepropylester, Methacrylsäurepropylester, Acrylsäurebutylester, Methacrylsäurebutylester, Acrylsäurehexylester, Methacrylsäurehexylester, Acrylsäureoctylester, Methacrylsäureoctylester, Acrylsäure-2-ethylhexylester, Methacrylsäure-2-ethylhexylester, 2-Hydroxyethylacrylat, 2-Hydroxyethylmethacrylat, 2-Hydroxybutylacrylat und 2-Hydroxybutylmethacrylat bevorzugt. Unter diesen Acrylsäurederivaten sind insbesondere Acrylsäure, Methacrylsäure, Ethylacrylsäure, Propylacrylsäure und Butylacrylsäure bevorzugt, Acrylsäure, Methacrylsäure besonders bevorzugt und Acrylsäure darüber hinaus bevorzugt.

Weiterhin erfindungsgemäß als α,β-ungesättigte Carbonsäure V bevorzugt sind Maleinsäureanhydridderivate, die 4 bis 20, bevorzugt 4 bis 10 und besonders bevorzugt 4 bis 6 Kohlenstoffatome enthalten. Unter den Maleinsäureanhydridderivaten ist Maleinsäureanhydrid besonders bevorzugt.

Als Diole II sind m,n-Diole mit 10 bis 400, bevorzugt 10 bis 200 und besonders bevorzugt 10 bis 100 einen Kohlenwasserstoff bildenden Kohlenstoffen, die vorzugsweise zusammenhängen, bevorzugt. Die ganzzahligen Variablen m und n geben die Position der zwei OH-Gruppen auf dem entsprechenden m,n-Diol II an. Erfindungsgemäß bevorzugte m,n-Diole II sind zum Beispiel 1,2-Decandiol, 1,2-Dodecandiol, 1,2-Tetradecandiol, 1,2-Hexadecandiol, 1,2-Octadecandiol, 1,10-Decandiol, 1,12-Dodecandiol, 1,14-Tetradecandiol, 1,16-Hexadecandiol, 1,18-Octadecandiol, 12-Hydroxystearylalkohol und 1-20-Eicosandiol, Butylalkohol.

Weiterhin können vorzugsweise Polyolefine mit endständigen OH-Gruppen als m,n-Diol II eingesetzt werden. Endständige hydroxyfunktionalisierte Polybutadiene und Polyisoprene sind hierunter bevorzugt. Vorzugsweise besitzen diese Polyolefine ein mittleres Molekulargewicht von 400 bis 10.000, insbesondere zwischen 500 bis 4000 g/mol. Vorzugsweise sind mindestens 40, bevorzugt mindestens 80 und besonders bevorzugt mindestens 90 % der Doppelbindungen in dem Polyolefin hydriert. Besonders bevorzugt ist es, wenn bei den aus Polyolefinen bestehenden m,n-Diolen die OH-Gruppen am ersten und letzten Kohlenstoffatom des Polyolefins gebunden sind.

Darüber hinaus können die Diole II in einer anderen erfindungsgemäßen ausführungsform weitere funktionelle Gruppen, wie Carbonsäure-, Carbonsäureester-, Amid-, Amino-, Alkanolamid-, Glycosid-, Saccharose- und / oder OH-Gruppen tragen. Besitzt das m,n-Diol eine Carbonsäuregruppe, so kann die Verbindung ganz oder teilweise als Kondensationsprodukt mit sich selbst vorliegen. Besonders bevorzugt sind gesättigte Polyhydroxyfettsäuren, insbesondere Polyhydroxyfettsäure PHF 110 der Fa. Harburger Fettchemie.

Erfindungsgemäß bevorzugte Alkylamine III sind 1-Decylamin, 1-Undecylamin, 1-Dodecylamin, 1-Tetradecylamin, 1-Hexadecylamin, 1-Octadecylamin, Talgfettamine, Polyolefinamine, insbesondere Polyisobutenamine. Besonders bervorzugt sind Polyisobutenamine mit einem mittleren Molekulargewicht zwischen 200 bis 5000, insbesondere zwischen 300 bis 1500 g/mol.

Erfindungsgemäß bevorzugte Monoalkohole VI sind $C_1$- bis $C_{40}$-Kohlenwasserstoffe, die eine Hydroxylguppe besitzen, wie Methanol, Ethanol, Propanol, Isopropanol, 1-Butanol, 2-Butanol, 1-Pentanol, 1-Hexanol, 1-Octanol, 1-Decanol, 2-Decanol, 1-Dodecanol, 2-Dodecanol, 1-Tetradecanol, 2-Tetradecanol, 2-Ethoxyethanol, 2-Propoxyethanol, 2-Isopropoxyethanol, 2-Butoxyethanol, Ethylenglykolmonomethylether, Diethylenglykolmonomethylether, Triethylenglykolmonomethylether, Tetraethylenglykolmonomethylether, Propylenglykolmonomethylether, Dipropylenglykolmonomethylether, Tripropylenglykolmonomethylether, Tetrapropylenglykolmonomethylether.

Bevorzugte $C_2$- bis $C_9$-Polyhydroxyverbindungen VII sind Verbindungen mit mindestens zwei OH-Gruppen, wie Butandiol, Neopentylglykol, Pentandiol, Hexandiol, Trimethylolpropan, Pentaerythrit, Glyzerin, Ethylenglykol und ihre höheren Homologen, wie Diethylenglykol, Trieethylenglykol, Propylenglykol und ihre höheren Homologen, wie Dipropylenglykol, Tripropylenglykol.

Die Carbonsäure VIII besitzt vorzugsweise 2 bis 6, bevorzugt 2 bis 4 und besonders bevorzugt 2 Carboxylgruppen. Hierunter sind besonders bevorzugt Maleinsäure, Fumarsäure, Malonsäure, Adipinsäure, Glutarsäure, Bernsteinsäure, Pimelinsäure, Korksäure, Azelainsäure, Sebacinsäure, Phthalsäure, Isophthalsäure, Terephthalsäure Trimellitsäure, Trimesinsäure, Amerginsäure, erhältlich bei der Firma Harburger Fettchemie, und/oder deren Anhydride und oder deren Säurechloride.

Darüber hinaus können die Carbonsäuren VIII, die Monoalkohole VI und Polyhydroxyverbindungen VII gegebenenfalls weitere funktionelle Gruppen wie Alkyl-, Aryl-, Amino,- Sulfonat-, Thio-, Phosphonat-, Acrylatgruppen besitzen. Sofern diese funktionellen Gruppen bei der Herstellung des Polyolgemisches oder bei dem Einsatz des Polyolgemisches in der Polyurethansynthese stören, können die störenden funktionellen Gruppen mittels dem Fachmann allgemein bekannten Schutzgruppentechniken ge- und entschützt werden.

Gegebenenfalls können in geringen Mengen Monocarbonsäuren bei der Synthese von Polyesterol (i) mit verwendet werden.

Bevorzugt zur Herstellung der Polyesterole (i) wird die Umsetzung von Alkoholen mit freien Carbonsäuren. Üblicherweise führt man die Polykondensationsreaktion bei Temperaturen von 140 - 250°C unter Normaldruck oder vermindertem Druck durch. Gegebenenfalls werden die Umsetzungen katalysiert, vorzugsweise unter Verwendung von Säuren, Lewis-Säuren und Metallsalzen, insbesondere von Titan- und/oder Zinn enthaltenden Veresterungskatalysatoren, beispielsweise n-Butyltitanat, Zinn-II-octoat oder Zinndilaurat. Dabei wird die Destillation des Reaktionswassers vorzugsweise so lange durchgeführt, bis das Reaktionsgemisch eine Säurezahl von < 10 mg KOH/g, besonders bevorzugt < 3 mgKOH/g und insbesondere < 1 mgKOH/g aufweist. Weiterhin kann die Reaktion unter Inertgas, wie Stickstoff oder Argon durchgeführt werden, insbesondere um Produktverfärbungen durch Oxidationsprodukte zu verhindern. Das Reaktionswasser kann aber auch azeotrop, z. B. mit Toluol, aus dem Reaktionsgemisch entfernt werden.

Zur Herstellung der erfindungsgemäßen Polyetherole (ii) können Alkylenoxide IX, wie zum Beispiel Ethylenoxid, 1,2-Epoxypropan, 1,2-Epoxy-2-methylpropan, 1,2-Epoxybutan, 2,3-Epoxybutan, 1,2-Epoxy-3-methylbutan, 1,2-Epoxypentan, 1,2-Epoxy-3-methylpentan, 1,2-Epoxyhexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, (2,3-Epoxypropyl)benzol, Vinyloxiran, 3-Phenoxy-1,2-epoxypropan, 2,3-Epoxymethylether, 2,3-Epoxyethylether, 2,3-Epoxyisopropylether, 2,3-Epoxy-1-propanol, (3,4-Epoxybutyl)stearat, 4,5-Epoxypentylacetat, 2,3-Epoxypropanmethacrylat, 2,3-Epoxypropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)propenoxid, 3-(Perfluoroethyl)propenoxid, 3-(Perfluorobutyl)propenoxid, 4-(2,3-Epoxypropy)morpholin, 1-(Oxiran-2-ylmethyl)pyrrolidin-2-on, sowie deren beliebige Mischungen untereinander, eingesetzt werden. Bevorzugt sind Ethylenoxid, 1,2-Epoxypropan, 1,2-Epoxybutan, Styroloxid, Vinyloxiran und deren beliebige Mischungen untereinander, insbesondere Ethylenoxid, 1,2-Epoxypropan, und Mischungen aus Ethylenoxid, 1,2-Epoxypropan.

Die Polyetherole (ii) werden durch Inkontaktbringen unter dem Fachmann allgemein bekannten und gängigen Polymerisationsbedingungen erhalten.

Bevorzugt wird die Herstellung der Polyetherole (ii) durch Anlagerung eines Alkylenoxids IX in Anwesenheit basischer Katalysatoren durchgeführt. Als basische Katalysatoren können beispielsweise Amine, basische Salze, Metalloxide, Metallhydroxide, wie Natrium- oder Kaliumhydroxid sowie Alkalialkoholaten, wie Natriummethylat, Natrium- oder Kaliumethylat oder Kaliumisopropylat eingesetzt werden. Vorzugsweise kommen Alkali- und/oder Erdalkalimetallhydroxide zum Einsatz. In der Technik wird zumeist Kaliumhydroxid eingesetzt.

In einer weiteren Ausführungsform der Herstellung des Polyetherols (ii) wird die Anlagerung der Alkylenoxide IX in Anwesenheit sauer Katalysatoren, insbesondere durch Lewis-Säuren, wie Antimonpentachlorid, Borfluorid-Etherat u. a. oder Bleicherde durchgeführt.

In einer weiteren bevorzugten Ausführungsform dieses Verfahrens werden als Katalysator zur Anlagerung der Alkylenoxide IX Multimetallcyanide, häufig auch als DMC-Katalysatoren bezeichnet, eingesetzt. Die Vorteile beim Einsatz dieser Katalysatoren liegen zum einen in der höheren Reaktionsgeschwindigkeit bei der Anlagerung der Alkylenoxide, zum anderen zeichnen sich die so hergestellten Poyletheralkohole durch einen geringeren Gehalt an ungesättigten Bestandteilen aus.

In einer weiteren Ausführungsform dieses Verfahrens wird die Anlagerung der Gesamtmenge des Alkylenoxids in Anwesenheit allgemein bekannter basischer Katalysatoren durchgeführt. Als basische Katalysatoren können beispielsweise Amine, basische Salze, Metalloxide sowie Metallhydroxide eingesetzt werden. Vorzugsweise kommen Alkali- und/oder Erdalkalimetallhydroxide zum Einsatz. In der Technik wird zumeist Kaliumhydroxid eingesetzt.

Die Verwendung von allgemein bekannten Multimetallcyanidkomplex-Verbindungen, zumeist Zinkhexacyanometallaten ist zur Herstellung von Polyetherolen (ii) mit niedrigen Gehalten an ungesättigten Bestandteilen bevorzugt.

Gegebenenfalls können neben den erfindungsgemäßen Polyolgemischen oder Alyklaminen III weitere Startermoleküle zugesetzt werden, wie Wasser, Aminoalkohole wie N-Alkyl-dialkanolamine, beispielsweise N-Methyl-diethanolamin und Diole, z. B. Alkandiole oder Dialkylenglykole mit 2 bis 12 C-Atomen, vorzugsweise 2 bis 6 C-Atomen, wie Ethandiol, Propandiol-1,3, Butandiol-1,4 und Hexandiol-1,6, Triole, wie Glycerin und Trimethylolpropan, oder Polyhydroxyverbindungen, wie Pentaerythrit, Sorbit und Zuckerderivate.

Gegebenenfalls können die erfindungsgemäßen Polyesterole (i) und Polyetherole (ii) Zusatzstoffe enthalten. Insbesondere können dies lipophile Stoffe wie Asphalt, Petroleum, Schweröle oder Wachse sein. Weiterhin kommen oberflächenaktive Stoffe wie Silikone wie Polydimethylsiloxan in Betracht, die bekanntermaßen als Schaumstabilisatoren in Polyurethanschäumen wirken. Außerdem werden bevorzugt Antioxidantien den Polyesterolen (i) oder Polyetherolen (ii) oder dem Polyolgemisch zugesetzt.

Bezüglich der erfindungsgemäß einsetzbaren weiteren Polyesterole oder Polyetherole wird auf die nachfolgenden Ausführungen zu konventionellen Polyesterolen und Polyetherolen in Komponente A Bezug genommen.

Nähere Angaben über weitere geeignete Zusatzstoffe sind der Fachliteratur, beispielsweise der Monographie von J. H. Saunders und K. C. Frisch „High Polymers", Band XVI, Polyurethane Teil 1 und 2, Verlag Interscience Publishers 1962 bzw. 1964; dem „Kunstoff-Handbuch" Band 7, Polyurethane, 3. Auflage, 1993, herausgegeben von G. Oertel, Carl-Hansa-Verlag, München oder der DE-OS 29 017 74 zu entnehmen.

Bevorzugt sind jedoch Polyolgemische ohne Zusätze, sofern die Zusätze nicht zur Gewährleistung einer gewünschten Lagerstabilität notwendig sind.

Weiterhin betrifft die Erfindung ein Verfahren zur Herstellung eines Polyurethans durch Inkontaktbringen von mindestens einer eine mindestens ein erfindungsgemäßes Polyolgemisch oder mindestens ein Alkylamin III neben oder anstelle des Polyesterols (i) oder des Polyetherols (ii) als eine gegenüber Isocyanatgruppen reaktive Verbindung aufweisenden Komponente A und einer ein Polyisocyanat aufweisenden Komponente B.

Bei den vorstehenden Verfahren zur Herstellung eines Polyurethans werden Komponente A und B mit einem NCO-/OH-Gruppen-Index im Bereich von 80 bis 160, bevorzugt bei Polyurethanweichschäumen von 85 bis 130 und besonders bevorzugt von 90 bis 115 umgesetzt.

Weiterhin ist es erfindungsgemäß bevorzugt, daß bei dem erfindungsgemäßen Verfahren für die Polyurethansynthese übliche Katalysatoren oder Hilfsstoffe oder mindestens zwei davon, vorzugsweise bis maximal 10 Gew.-%, bezogen auf die bei der Polyurethansynthese eingesetzte Zusammensetzung, vorhanden sind.

In dem erfindungsgemäßen Verfahren ist es insbesondere bevorzugt, Treibmittel, vorzugsweise bis maximal 10 Gew.-%, bezogen auf die bei der Polyurethansynthese verwendete Zusammensetzung, einzusetzen, damit eine Schaumbildung erfolgt. Bei Weichschäumen sind $H_2O$ und $CO_2$ als Treibmittel bevorzugt.

Demnach ist ein Polyurethan erfindungsgemäß erhältlich durch Inkontaktbringen von mindestens einer eine mindestens ein erfindungsgemäßes Polyolgemisch oder mindestens ein Alkylamin III neben oder anstelle des Polyesterols (i) oder des Polyetherols (ii) als eine gegenüber Isocyanaten reaktive Verbindung aufweisende Komponente A und einer ein Polyisocyanat aufweisenden Komponente B und gegebenenfalls eines Treibmittels, wenn ein Polyurethanschaum erhalten werden soll.

Zudem betrifft die Erfindung insbesondere ein Polyurethan, das mindestens eines der Polyolgemische oder vorzugsweise mindestens eines der Polyesterole (i) oder Polyetherole (ii) oder mindestens zwei davon enthält.

Weiterhin ist es bevorzugt, daß im erfindungsgemäßen Polyurethan nach dem DBL5450-Test als eine Eigenschaft die Zugfestigkeit um maximal 40 % abnimmt, und zusätzlich als mindestens eine weitere Eigenschaft die Dehnung um maximal 5 % abnimmt, oder der Druckverformungsrest um maximal 13 % zunimmt, oder die Stauchhärte bei 40 % Verformung um maximal 50 % abnimmt, oder mindestens zwei Eigenschaften davon, jeweils im Vergleich zu dem Polyurethan vor der Hydrolysebehandlung. Besonders bevorzugt ist ein Polyurethan, das alle der vorstehenden Eigenschaften zeigt.

Weiterhin betrifft die Erfindung ein Verfahren zur Einstellung einer oder mindestens zwei der zuvor definierten Eigenschaften in einem Polyurethan, vorzugsweise einem -Schaum, wobei der Anteil des erfindungsgemäßen Polyolgemisches in der Komponente A im Bereich von 0,01 bis 100, bevorzugt von 0,1 bis 50 und besonders bevorzugt von 0,5 bis 10 Gew.-%, bezogen auf die Komponente A variiert wird.

Als Komponente A kommen neben den erfindungsgemäßen Polyester- bzw. Polyetherolen insbesondere konventionelle Polyesterole oder Polyetherole, in Betracht.

Die konventionellen Polyesterole können auf bekannte Weise durch Polykondensation von Carbonsäuren VIII mit Polyhydroxyverbindungen hergestellt werden. Derartige Produkte werden beispielsweise im Kunststoff-Handbuch, Band 7, "Polyurethane", herausgegeben von Günter Oertel, Carl-Hanser-Verlag München, 3. Auflage 1993, Seiten 67 bis 74, beschrieben.

Ebenfalls können Hydroxycarbonsäuren und/oder deren Derivate wie Lactone mit sich selber und/oder mit Carbonsäuresäurederivaten und/oder Alkoholen umgesetzt werden. Beispielhaft zu nennen sind Glykolsäure, Milchsäure, Hydroxypropionsäure, Hydroxybuttersäure, Hydroxyvaleriansäure, verwendet werden.

Neben der direkten Umsetzung sind auch Varianten der Veresterung bzw. Umesterung bekannt.

Gegebenenfalls können in geringen Mengen monofunktionale Alkohole oder Carbonsäuren bei der Synthese mitverwendet werden.

Neben den erfindungsgemäßen Polyetherolen geeignete konventionelle Polyetherole besitzen üblicherweise Molekulargewichte von 100 bis 8000 g/mol, vorzugsweise 300 bis 6000 g/mol und insbesondere 400 bis 5000 g/mol und eine Funktionalität von $\geq 2$, besondere zwischen 2 und 3. Die Herstellung kann nach dem Fachmann bekannten Methoden durchgeführt werden.

Bevorzugt wird die ringöffnende Polymerisation unter Verwendung von basischen und Multimetallcyanid-Katalysatoren. Als bervorzugte Alkylenoxide IX seien z. B. genannt: Ethylenoxid, 1,2-Propylenoxid, Tetrahydrofuran, 1,2- und 2,3-Butylenoxid. Vorzugsweise Anwendung finden Ethylenoxid, Propylenoxid-1,2 und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole wie N-Alkyl-dialkanolamine, beispielsweise N-Methyl-diethanolamin und Diole, z. B. Alkandiole oder Dialkylenglykole mit 2 bis 12 C-Atomen, vorzugsweise 2 bis 6 C-Atomen, wie Ethandiol, Propandiol-1,3, Butandiol-1,4 und Hexandiol-1,6, Triole, wie Glycerin und Trimethylolpropan, oder Polyhydroxyverbindungen, wie Pentaerythrit, Sorbit und Zuckerderivate. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).

Für Polyurethan-Formweichschaumstoffe werden vorzugsweise Polyetherole, hergestellt durch ringöffnende Polymerisation von Propylenoxid- 1,2 und / oder Ethylenoxid verwendet, in denen mehr als 50 %, vorzugsweise 60 bis 80 % der OH-Gruppen primäre OH-Gruppen sind und bei denen zumindest ein Teil des Ethylenoxids als endständiger Block angeordnet ist. Inbesondere werden mit Glyzerin, Trimethylopropan, Glykol, Sorbit oder deren Mischungen gestartete Alkoxylate eingesetzt. Beispielhaft sind Lupranol® 2090 und Lupranol® 2095 der Fa. BASF AG zu nennen.

Für Polyurethan-Blockschaumstoffe werden vorzugsweise Polyetherole, hergestellt durch ringöffnende Polymerisation von Propylenoxid-1,2 und Ethylenoxid verwendet, in denen weniger als 20%, vorzugsweise 0 bis 10% der OH-Gruppen primäre OH-Gruppen sind. Inbesondere werden mit Glycerin, Trimethylopropan, Glykol, Sorbit oder deren Mischungen gestartete Alkoxylate eingesetzt. Beispielhaft sind Lupranol® 2080 und Lupranol® 2085 der Fa. BASF AG zu nennen.

Darüber hinaus können Polymerpolyole in der A-Komponente eingesetzt werden, wie zum Beispiel Lupranol® 4100, Lupranol® 4190, Lupranol® 4195, Lupranol® 4500 und Lupranol® 4580 der Fa. BASF AG

Als Komponente B, insbesondere als Polyisocyanate und besonders bevorzugt als organische Diisocyanate kommen beispielsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten $C_6$-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexan-diisocyanat, 1-Methyl-2,4- und -2,6-cyclohexan-diisocyanat sowie die entsprechenden Isomerengemische, 4,4'-, 2,4'-und 2,2'-Dicyclohexylmethan-diisocyanat sowie die entsprechenden Isomerengemische und vorzugsweise aromatische Diisocyanate, wie 1,5-Naphthylen-diisocyanat (1,5-NDI), 2,4- und 2,6-Toluylen-diisocyanat (TDI) sowie deren Gemische, 2,4'-, 2,2'-, und vorzugsweise 4,4'-Diphenylmethan-diisocyanat (MDI) sowie Mischungen aus mindestens zwei dieser Isomere, Polyphenylpolymethylen-polyisocyanate (Polymer-MDI, PMDI) mit zwei oder mehr aromatischen Systemen, Mischungen aus 2,4'-, 2,2'- und 4,4'-Diphenylmethan-diisocyanaten und Polyphenyl-polymethylen-polyisocyanaten (Roh-MDI), Mischungen aus Roh-MDI und Toluylen-Diisocyanaten, Polyphenyl-Polyisocyanate, urethanmodifizierte flüssige 4,4'- und/oder 2,4'-Diphenylmethan-diisocyanate und 4,4'-Diisocyanato-diphenylethan- (1,2). Verwendung finden besonders bevorzugt Isocyanate, die bei einer Temperatur von 25°C in flüssiger Form vorliegen, beispielsweise bekannte Carbodiimid-modifizierte Isocyanate und/oder MDI mit einem Anteil an 2,4'-Isomeren von größer als 40 %.

Als Katalysatoren, welche insbesondere die Reaktion zwischen den NCO-Gruppen der Diisocyanate und den OH-Gruppen der Polyolkomponente beschleunigen, können die nach dem Stand der Technik bekannten und üblichen stark basischen Amine wie beispielsweise 2,3-Dimethyl-3,4,5,6-tetrahydropyrimidin, Tris-(dialkylaminoalkyl)-s-hexahydrotriazine, wie z. B. Tris-(N,N-dimethylaminopropyl)-s-hexahydrotriazin und bevorzugt die üblichen tertiären Amine, wie z. B. Triethylamin, Tributylamin, Dimethylbenzylamin, N-Ethyl-, N-Methyl-, N-Cyclohexylmorpholin, Dimethylcyclohexylamin, Dimorpholinodiethylether, 2-(Dimethylaminoethoxy)-ethanol, 1,4-Diaza-bicyclo-[2.2.2]-octan, 1-Aza-bicyclo-[3.3.0]-octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol, Di-(4-N,N-dimethylaminocyclohexyl)-methan und ähnliche sowie organische Metallverbindungen wie Titansäureester, Eisenverbindungen wie z. B. Eisen-(III)-acetylacetonat, Zinnverbindungen, z. B. Zinn-(II)-Salze von organischen Carbonsäuren, beispielsweise Zinn-(II)-diacetat, das Zinn-(II)-Salz der 2-Ethylhexansäure (Zinn-(II)-octoat), Zinn-(II)-dilaurat oder die Dialkylzinn-(IV)-Salze von organischen Carbonsäuren, wie z. B. Dibutylzinn-(IV)-diacetat, Dibutylzinn-(IV)-dilaurat, Dibutylzinn-(IV)-maleat oder Dioctylzinn-(IV)-diacetat oder ähnliche sowie Dibutylzinn-(IV)-dimercaptid oder Gemische mit mindestens zwei der genannten Katalysatoren sowie synergistisch wirkende Kombinationen aus stark basischen Aminen und organischen Metallverbindungen eingesetzt werden. Die Katalysatoren können in üblichen Mengen, beispielsweise 0,002 bis 5 Gew.-%, bezogen auf die Polyalkohole, verwendet werden.

Als Treibmittel können allgemein bekannte Treibmittel, z.B. Stoffe, die einen Siedepunkt unter Normaldruck im Bereich von -40°C bis 120°C besitzen, Gase und/oder flüssige Treibmittel eingesetzt werden, beispielsweise Kohlendioxid, Alkane und/oder Cycloalkane wie Isobutan, Propan, n- oder iso-Butan, Pentan und Cyclopentan, Ether wie Diethylether, Methylisobutylether und Dimethylether, Stickstoff, Sauerstoff, Helium, Argon, Lachgas, halogenierte Kohlenwasserstoffe, beispielsweise Dichlorfluormethan, Monofluortrichlor-methan, Trifluortrichlorethan und/oder teilhalogenierte Kohlenwasserstoffe wie beispielsweise Trifluormethan, 1,1-Dichlor-1-fluorethan, Monochlortetrafluorethan, Monochlortrifluorethan, Monochlordifluorethan, Difluorethan, Dichlordifluorethan, Pentafluorethan, Tetrafluorethan, Tetrafluorethan, Dichlormonofluorethan oder Mischungen, die mindestens zwei der beispielhaft genannten Treibmittel enthalten.

Besonders bevorzugt ist Wasser als Treibmittel. Wasser bildet mit den Isocyanaten $CO_2$, das letztendlich als Treibmittel wirkt. $CO_2$ kann jedoch bei der Polyurethanherstellung auch gesondert zugesetzt werden.

Als Hilfsstoffe können beispielsweise allgemein bekannte Kettenverlängerer wie $C_2$-$C_4$-Diole, oberflächenaktive Substanzen, Schaumstabilisatoren, z. B. Siloxanoxyalkylencopolymere, Zellregler, Füllstoffe, Flammschutzmittel, Keimbildungsmittel, Oxidationsverzögerer, Stabilisatoren, Farbstoffe und Pigmente, Inhibitoren, Licht, Hitze oder Verfärbung, Farbstoffe, anorganische und/oder organische Füllstoffe, Verstärkungsmittel und/oder Weichmacher verwendet werden.

Nähere Angaben über die oben genannten Hilfsmittel sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem "Kunststoff-Handbuch", Band 7, Polyurethane, 3. Auflage, 1993, herausgegeben von G. Oertel, Carl-Hanser-Verlag, München oder der DE— OS 29 01 774 zu entnehmen.

Weiterhin haben sich erfindungsgemäß Gebilde bewährt, die mindestens eines der erfindungsgemäßen Polyolgemische oder mindestens der erfindungsgemäßen Polyurethane oder mindestens zwei davon beinhalten. Derartige Gebilde sind vorzugsweise Schäume, Folien, Fasern, Formteile, Beschichtungen und Filme. Als Gebilde sind insbesondere Form- und Blockweichschaumstoffe bevorzugt. Diese werden insbesondere als Schaumpolster, vorzugsweise in Möbeln, Matratzen und Kfz-Bauteilen wie Autositzen und -Teppichen verwendet.

Zudem ist es bevorzugt, die erfindungsgemäßen Polyolgemische für Polyurethane, insbesondere für die Herstellung von Polyurethanen und insbesondere zur Verringerung der Alterung von Polyurethanen zu verwenden.

Weiterhin ist es bevorzugt, das erfindungsgemäße Polyolgemisch zur Einstellung einer der zuvor ausgeführten Eigenschaften in einem Polyurethan oder einem Gebilde zu verwenden.

Zudem hat sich die Verwendung eines erfindungsgemäßen Polyolgemischs oder eines erfindungsgemäßen Polyurethans oder von beiden in Gebilden, insbesondere zur Verringerung des Alterns bei geringer Geruchsbelastung bewährt.

Die Erfindung wird nun anhand nicht einschränkender Beispiele erläutert.

## Beispiele

**Beipiel 1**: Herstellung des Polyols E (II + VII)

In einer Laborrührapparatur mit Temperaturmeßeinrichtung, Stickstoffanschluß und Vakuumanschluß werden 950 g eines Polypropylenglykols mit einem Molekulargewicht von 1000 g/mol (Lupranol[®] 1100von der Fa. BASF AG und 190 g eines Wachses auf der Basis eines Ethylen/Acrylsäure-Copolymers (Luwax[®] EAS1 von der Fa. BASF AG) mit einer mittleren molaren Masse von 3600 g/mol und einer Säurezahl von 43 mgKOH/g bei einer Temperatur von 130°C innig miteinander vermischt. Anschließend wird die Temperatur auf 220°C erhöht und dabei gleichzeitig entstehendes Reaktionswasser destillativ entfernt. Nach Bildung von 28 ml Wasser wird die Reaktion mit 5 ppm n-Butyltitanat katalysiert. Die Entfernung von weiterem Reaktionswasser erfolgt unter einem Druck von 50 bis 15 mbar. Nach der Entstehung und Entfernung von insgesamt 40 ml Reaktionswasser werden dem Kondensationsprodukt weitere 5 ppm n-Butyltitanat hinzugefügt. Bei einer Säurezahl kleiner als 3 mgKOH/g wird die Reaktion beendet. Das so entstandene Polyol E besitzt die folgenden Eigenschaften:

Hydroxylzahl   = 86,1 mgKOH/g
Säurezahl      = 2,0 mgKOH/g
Viskosität     = 240 mPa*s bei 75°C
Dichte         = 956,8 kg/m$^3$

**Beipiel 2**: Herstellung des Polyols F (II + VII + VIII)

In einem Laborrührreaktor werden 955 g Diethylenglykol (9 Mol) mit 1170 g Adipinsäure (8 Mol) versetzt und bis zur vollständigen Verflüssigung des Reaktionsgemisches auf 130°C aufgeheizt. Dazu gibt man 900 g einer hydroxylierten Rübölfettsäure (2,25 Mol; Polyhydroxyfettsäure PHF 110 von der Fa. Harburg-Chemie) mit einer Säurezahl von 140 mgKOH/g und einer Hydroxylzahl von 220 mgKOH/g. Unter weiterer Erwärmung des Reaktionsgemisches auf 200°C werden 75 ml Reaktionswasser unter Normaldruck destillativ entfernt und danach wird die Reaktion mit 10 ppm n-Butyltitanat katalysiert. Bei einer erreichten Säurezahl von weniger als 2 mgKOH/g wird die Reaktion beendet. Das so entstandene klare, leicht gelb gefärbte Polyol F besitzt die folgenden Eigenschaften:

Hydroxylzahl   = 92 mgKOH/g
Säurezahl      = 1,3 mgKOH/g
Viskosität     = 890 mPa*s bei 75°C
Wassergehalt   = 14 ppm

**Vergleichsbeispiel 1 und Beispiel 3 bis Beispiel 6:** Herstellung der Polyisocyanat-Polyadditionsprodukte:

Die in der Tabelle 1 dargestellten A- und B-Komponenten wurden in dem Vergleichsbeispiel 1 und in den Beispielen 3 bis 6 zu Polyurethanweichschaumstoffen umgesetzt. Alle Komponeneten außer dem Isocyanat Lupranat[®] T80 A (BASF Aktiengesellschaft) werden intensiv vermischt. Danach wird das Lupranat[®] T80 A unter Rühren hinzugegeben und die Reaktionsmischung in eine offene Form vergossen, worin sie zum Polyurethan-Schaumstoff ausschäumt.

Die Produkteigenschaften der erfindungsgemäßen Polyurethan-Schaumstoff sind in der Tabelle 2 zusammengefaßt. Die verwendeten Prüfnormen sind in der Tabelle 3 zusammengestellt.

Tabelle 1

| A-Komponte | OHZ [mgKOH/g] | Vergleichsbeispiel 1 Menge [g] | Beispiel 3 Menge [g] | Beispiel 4 Menge [g] | Beispiel 5 Menge [g] | Beispiel 6 Menge [g] |
|---|---|---|---|---|---|---|
| Polyol A | **48** | 1000 | 999 | 850 | 800 | 900 |
| Polyol B | **145** | | | 100 | | |
| Polyol C | **46*** | | 1 | | | |
| Polyol D | 165 | | | 50 | | |
| Polyol E | 86 | | | | 200 | |
| Polyol F | | | | | | 100 |
| Wasser | 6233 | 38 | 38 | 38 | 38 | 38 |
| BF 2370 | 0 | 10 | 10 | 10 | 10 | 7,5 |
| N 201 | 560 | 2,4 | 2,4 | 2,4 | 2,4 | 1,9 |
| N 206 | 426 | 0,8 | 0,8 | 0,8 | 0,8 | 0,6 |
| K 29 | 0 | 2,3 | 2,3 | 2,3 | 2,3 | 2,0 |
| **Summe** | | 1053,5 | 1053,5 | 1053,5 | 1053,5 | 1050,0 |
| **B-Komponte** | **NCO [%]** | **Menge** [g] | **Menge** [g] | **Menge** [g] | **Menge** [g] | **Menge** [g] |
| Lupranat® T80 A | 48,3 | 488,0 | 488,0 | 516,4 | 501,0 | 494,8 |
| **Index** | | **110** | **110** | **110** | **110** | **110** |

* Aminzahl

Tabelle 2:

| Prüfdaten | Einheit | Vergleichs-beispiel 1 | Beispiel 3 | Beispiel 4 | Beispiel 5 | Beispiel 6 |
|---|---|---|---|---|---|---|
| Startzeit | [s] | 15 | 8 | 9 | 15 | 12 |
| Abbindezeit | [s] | 90 | 60 | 70 | 80 | 80 |
| Steigzeit | [s] | 90 | 65 | 85 | 90 | 90 |
| Steighöhe | [mm] | 275 | 290 | 295 | 285 | 270 |
| Steighöhe nach 5 min | [mm] | 270 | 280 | 290 | 280 | 265 |
| Luftdurchlässigkeit | [mmWs] | 10 | 10 | 10 | 10 | 10 |
| Rohdichte | [kg/m³] | 25,3 | 25,4 | 25,6 | 28,4 | 25,9 |
| Stauchhärte bei 40% | [kPa] | 4,7 | 4,1 | 3,2 | 4,1 | 4,4 |
| Zugfestigkeit | [kPa] | 79,1 | 83 | 73 | 94 | 85 |
| Dehnung | [%] | 121 | 139 | 151 | 157 | 130 |
| Druckverformungsrest bei 50% | [%] | 2,4 | 1,9 | 3,7 | 2,7 | 2,0 |
| **Hydrolysetest DBL 5450** | **Einheit** | | | | | |
| Δ Zugfestigkeit | [%] | -43 | -5 | -39 | -47 | -8 |
| Δ Dehnung | [%] | 117 | 90 | -29 | -17 | 87 |
| Druckverformungsrest bei 50% | [%] | 7 | 5,0 | 10 | 15 | 5,8 |
| Δ Stauchhärte | [%] | -52 | -44 | -37 | -46 | -48 |

EP 1 074 569 A1

Tabelle 3

| Prüfmethode | Prüfnorm |
|---|---|
| Rohdichte | DIN 53420 |
| Zugversuch<br><br>- Zugfestigkeit<br><br>- Dehnung | DIN 53571 |
| Druckverformungsrest | DIN 53572 |
| Rückprall-Elastizität | DIN 53573 |
| Eindruckhärte | DIN 53576 |
| Stauchhärte | DIN 53577 |
| △ Zugfestigkeit | *Zugfestigkeit vor Hydrolyse - Zugfestigkeit nach Hydrolyse* / *Zugfestigkeit nach Hydrolyse* |
| △ Dehnung | *Dehnung vor Hydrolyse - Dehnung nach Hydrolyse* / *Dehnung nach Hydrolyse* |
| △ Stauchhärte | *Stauchhärte vor Hydrolyse - Stauchhärte nach Hydrolyse* / *Stauchhärte nach Hydrolyse* |

Polyol A:  Polyetherol Lupranol® 2080 (Fa. BASF AG), mit einer OH-Zahl von 48 mgKOH/g
Polyol B:  Polyetherol Lupranol® VP 9297 (Fa. BASF AG), mit einer OH-Zahl von 145 mgKOH/g
Polyol C:  Polyisobutenamin - Mischung aus: 42% $(CH_3)_3CH-[CH_2-C(CH_3)_2]_n-CH_2-CH(CH_3)-CH_2-NH_2$, 50% $(CH_3)_3CH-[CH_2-C(CH_3)_2]_n-CH_2-CH(CH_3)-NH_2$, 8% $(CH_3)_3CH-[CH_2-C(CH_3)_2]_n-CH_2-NH_2$, mit n = 3-18, und einem Molekulargewicht von $M_w$ = 1000 g/mol
Polyol D:  Prisorine® PMIS 2034, Propylenglykolisostearat (Fa. Unichema), mit einer OH-Zahl von 155-175 mgKOH/g
Lupragen N201:  1,4-Diazabicyclo-[2,2,2]-octan (33%) in Dipropylenglykol (67%), (BASF AG)
Lupragen N206:  Bis-(2-Dimethylaminoethyl)ether (70%) Dipropylenglykol (30%), (BASF AG)
Kosmus® 29:  Zinn-II-Salz der Ethylhexansäure, (Goldschmidt AG)
Tegostab® BF 2370: Silikonstabilisator, (Goldschmidt AG)
Lupraphen® T80:  2,4- / 2,6-Toluylendiisocyanatgemisch, (BASF AG)

^@>110

**Patentansprüche**

**1.** Polyolgemisch bestehend aus

0,1 bis 100 Gew.-% eines Polyesterols (i) oder eines Polyetherols (ii) oder mindestens zwei davon, wobei

(i) das Polyesterol (i) erhältlich ist aus

a) einem Copolymer I, erhältlich aus einem Olefin IV und einer $\alpha,\beta$-ungesättigten Carbonsäure V, und einem Monoalkohol VI oder einer $C_2$- bis $C_9$-Polyhydroxyverbindung VII oder einem Diol II, das 10 oder mehr Kohlenstoffatome aufweist, oder einem Gemisch aus zwei oder mehr davon; oder

b) dem Diol II, das 10 oder mehr Kohlenstoffatome aufweist, und einer $C_2$- bis $C_9$-Polyhydroxyverbindung VII oder einer Carbonsäure VIII mit mindestens zwei Carboxylgruppen oder einem Gemisch aus zwei oder mehr davon;

ii) das Polyetherol (ii) erhältlich ist aus

c) dem Diol II, das 10 oder mehr Kohlenstoffatome aufweist, und einem Alkylenoxid IX; oder

d) einem Alkylamin III und dem Alkylenoxid IX;

wobei das Polyesterol (i) und das Polyetherol (ii) 10 bis 10000 Kohlenstoffatome besitzen und nicht aus Rizinusöl oder einer dimeren Fettsäure erhältlich sind,

0 bis 99,9 Gew.-% mindestens eines weiteren Polyesterols oder mindestens eines weiteren Polyetherols; sowie

0 bis 10 Gew.-% Zusatzstoffen.

2. Polyolgemisch nach Anspruch 1, wobei das Polyesterol (i) oder das Polyetherol (ii) oder mindestens zwei davon mindestens eine der folgenden Eigenschaften zeigen:

- eine Hydroxyzahl im Bereich von 10 bis 600 mgKOH/g,
- eine Säurezahl im Bereich von 0 bis 5 mgKOH/g,
- einen Wassergehalt im Bereich von 1 bis 200 ppm.

3. Verfahren zur Herstellung eines Polyurethans durch Inkontaktbringen von mindestens einer Komponente A, die mindestens ein Polyolgemisch gemäß Anspruch 1 oder 2 oder mindestens ein Alkylamin III als eine gegenüber Isocyanaten reaktive Verbindung aufweist, und einer ein Polyisocyanat aufweisenden Komponente B.

4. Verfahren nach Anspruch 3, wobei durch ein Treibmittel eine Schaumbildung erfolgt.

5. Polyurethan, erhältlich durch in Kontakt bringen von mindestens einer Komponente A, die mindestens ein Polyolgemisch gemäß Anspruch 1 oder 2 oder mindestens ein Alkylamin III als eine gegenüber Isocyanaten reaktive Verbindung aufweist und einer ein Polyisocyanat aufweisenden Komponente B.

6. Polyurethan mindestens enthaltend ein Polyolgemisch gemäß Anspruch 1 oder 2.

7. Polyurethan nach Anspruch 5 oder 6, wobei nach Hydrolysebehandlung gemäß DBL5450 als eine Eigenschaft die Zugfestigkeit um maximal 40 % abnimmt, und zusätzlich als mindestens eine weitere Eigenschaft die Bruchdehnung um maximal 5 % abnimmt, oder der Druckverformungsrest um maximal 12 % zunimmt, oder die Stauchhärte bei 40 % Verformung um maximal 50 % abnimmt, jeweils im Vergleich zu dem Polyurethan vor der Hydrolysebehandlung, oder mindestens zwei Eigenschaften davon.

8. Gebilde, beinhaltend mindestens ein Polyolgemisch gemäß Anspruch 1 oder 2, oder mindestens ein Polyurethan gemäß einem der Ansprüche 5, 6 und 7, oder mindestens zwei davon.

9. Verwendung eines Polyolgemischs nach Anspruch 1 oder 2 für ein Polyurethan oder zur Einstellung von einer oder mindestens zwei der in Anspruch 7 definierten Eigenschaften in einem Polyurethan oder einem Gebilde.

10. Verwendung eines Polyolgemisch gemäß Anspruch 1 oder 2, oder mindestens eines Polyurethans gemäß einem der Ansprüche 5, 6 oder 7, oder mindestens zwei davon zur Herstellung von Gebilden.

**12**

Europäisches  **EUROPÄISCHER TEILRECHERCHENBERICHT**   Nummer der Anmeldung
Patentamt    der nach Regel 45 des Europäischen Patent-   EP 00 11 5069
Übereinkommens für das weitere Verfahren als
europäischer Recherchenbericht gilt

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.7) |
|---|---|---|---|
| X | GB 972 145 A (BAYER AG) 7. Oktober 1964 (1964-10-07) * Seite 2, Zeile 39 - Seite 2, Zeile 50 * * Ansprüche 1,3,11 * --- | 1-10 | C08G18/42 C08G18/48 C08G18/62 |
| X | GB 2 248 844 A (NIPPON PAINT CO LTD) 22. April 1992 (1992-04-22) * Seite 4, Zeile 12 - Seite 5, Zeile 21 * * Tabellen 1,2 * * Ansprüche 4-6 * --- | 1-3,5,6 | |
| X | US 4 789 705 A (KASE MITSUO ET AL) 6. Dezember 1988 (1988-12-06) * Spalte 2, Zeile 67 - Spalte 3, Zeile 40 * * Ansprüche 1,11 * --- | 1-3,5,6 | |
| X | GB 1 112 099 A (RHONE-POULENC) 1. Mai 1968 (1968-05-01) * Seite 1, Zeile 29 - Seite 1, Zeile 84 * * Anspruch 1 * --- | 1-3,5,6, 8 | |
| | -/-- | | **RECHERCHIERTE SACHGEBIETE (Int.Cl.7)** C08G |

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:
Siehe Ergänzungsblatt C

| Recherchenort | Abschlußdatum der Recherche | Prüfer |
|---|---|---|
| MÜNCHEN | 6. November 2000 | Heidenhain, R |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C08)

Europäisches
Patentamt

**EUROPÄISCHER
TEILRECHERCHENBERICHT**

Nummer der Anmeldung

EP 00 11 5069

| EINSCHLÄGIGE DOKUMENTE | | | KLASSIFIKATION DER ANMELDUNG (Int.Cl.7) |
|---|---|---|---|
| Kategorie | Kennzeichnung des Dokuments mit Angabe, soweit erforderlich der maßgeblichen Teile | Betrifft Anspruch | |
| X | US 3 673 240 A (HEDRICK GLEN W ET AL) 27. Juni 1972 (1972-06-27) * Spalte 2, Zeile 31 - Spalte 2, Zeile 60 * * Beispiel 2 *  ----- | 1-3,5,6, 8 | |
| | | | **RECHERCHIERTE SACHGEBIETE (Int.Cl.7)** |

**UNVOLLSTÄNDIGE RECHERCHE**
**ERGÄNZUNGSBLATT C**

Unvollständig recherchierte Ansprüche:
        1-10

Grund für die Beschränkung der Recherche:

Die geltenden Patentansprüche 1-10 beziehen sich auf eine unverhältnismäßig große Zahl möglicher Verbindungen. In der Tat umfassen sie so viele Wahlmöglichkeiten, Veränderliche, mögliche Permutationen und/oder Einschränkungen, dass sie im Sinne von Art. 84 EPÜ in einem solche Maße unklar oder zu weitläufig gefasst erscheinen, als daß sie eine sinnvolle Recherche ermöglichten. Daher wurde die Recherche auf die Teile der Patentansprüche gerichtet, die als klar und knapp gefaßt gelten können, nämlich Polyesterdiole und Polyetherdiole enthaltend das Strukturelement II gemäss Anspruch 1 (d.h. die Varianten (i) b) und (ii) c)

## ANHANG ZUM EUROPÄISCHEN RECHERCHENBERICHT
## ÜBER DIE EUROPÄISCHE PATENTANMELDUNG NR.

EP 00 11 5069

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2000

| Im Recherchenbericht angeführtes Patentdokument | | Datum der Veröffentlichung | Mitglied(er) der Patentfamilie | | Datum der Veröffentlichung |
|---|---|---|---|---|---|
| GB 972145 | A | | DE | 1131003 B | |
| | | | FR | 1314686 A | 12-04-1963 |
| GB 2248844 | A | 22-04-1992 | JP | 4103678 A | 06-04-1992 |
| | | | US | 5418309 A | 23-05-1995 |
| US 4789705 | A · | 06-12-1988 | JP | 1956569 C | 10-08-1995 |
| | | | JP | 6078418 B | 05-10-1994 |
| | | | JP | 62209124 A | 14-09-1987 |
| GB 1112099 | A | | BE | 684663 A | 27-01-1967 |
| | | | CH | 467827 A | |
| | | | DE | 1645218 A | 10-04-1969 |
| | | | DK | 115287 B | 22-09-1969 |
| | | | FR | 1488985 A | 27-10-1967 |
| | | | FR | 1490746 A | 08-11-1967 |
| | | | LU | 51648 A | 27-09-1966 |
| | | | NL | 130123 C | |
| | | | NL | 6610241 A | 30-01-1967 |
| | | | NO | 120552 B | 02-11-1970 |
| | | | SE | 324893 B | 15-06-1970 |
| | | | US | 3506617 A | 14-04-1970 |
| US 3673240 | A | 27-06-1972 | KEINE | | |

EPO FORM P0461

Für nähere Einzelheiten zu diesem Anhang : siehe Amtsblatt des Europäischen Patentamts, Nr.12/82